Europäisches Patentamt

European Patent Office

Office européen des brevets

(19)

(11) Numéro de publication : **0 403 385 B1**

(12) **FASCICULE DE BREVET EUROPEEN**

(45) Date de publication du fascicule du brevet :
22.07.92 Bulletin 92/30

(51) Int. Cl.⁵ : **B60S 1/38**

(21) Numéro de dépôt : **90401652.4**

(22) Date de dépôt : **14.06.90**

(54) **Déflecteur d'air pour balai d'essuie-glace, notamment pour véhicule automobile.**

(30) Priorité : **15.06.89 FR 8907967**

(43) Date de publication de la demande :
**19.12.90 Bulletin 90/51**

(45) Mention de la délivrance du brevet :
**22.07.92 Bulletin 92/30**

(84) Etats contractants désignés :
**DE ES GB IT**

(56) Documents cités :
**EP-A- 0 226 013
GB-A- 2 146 891
PATENT ABSTRACTS OF JAPAN vol. 12, no.
52 (M-668)(2899) 17 février 88, & JP-A-62
199558 (NIPPON DENSO) 03 septembre 87,**

(73) Titulaire : **VALEO SYSTEMES D'ESSUYAGE
11, rue Faraday
F-78180 Montigny-Le-Bretonneux (FR)**

(72) Inventeur : **Raymond, Guy
39, Avenue Jean-Baptiste Corot
F-77680 Roissy-en-Brie (FR)**

(74) Mandataire : **Gamonal, Didier
Société VALEO Service Propriété Industrielle
30, rue Blanqui
F-93406 Saint Ouen (FR)**

**Description**

La présente invention se rapporte à un déflecteur d'air pour un dispositif d'essuie-glace notamment de véhicule automobile.

L'utilisation d'un déflecteur d'air pouvant être solidaire soit d'un balai d'essuie-glace, soit d'un bras d'essuie-glace portant ledit balai, est nécessaire pour éviter le décollement du balai sous l'effet des forces aérodynamiques créées par les flux d'air frappant ledit balai lorsque le véhicule portant le dispositif d'essuie-glace, constitué du balai et du bras, circule à grande vitesse et que ledit dispositif est en fonctionnement.

Un tel déflecteur doit avoir son bord libre dirigé vers la surface à essuyer, ici le pare-brise du véhicule automobile, le plus près de ladite surface de façon à réduire au minimum l'espace entre ladite surface et ledit bord du déflecteur pour éviter que les flux d'air puissent s'engouffrer dans cet espace en risquant de créer une force aérodynamique sur la face arrière du déflecteur visant à soulever ainsi le dispositif d'essuie-glace.

Cependant, une telle proximité est limitée, d'une part, par la courbure du pare-brise et, d'autre part, par un risque de contact du bord libre du déflecteur d'air avec ledit pare-brise, contact pouvant endommager la surface à essuyer et gêner à terme la bonne visibilité du conducteur.

Il a été proposé, notamment dans la demande de brevet allemand DE-A-3 637 348, de prévoir le bord libre d'un déflecteur d'air en un matériau nettement plus mou que le reste du déflecteur.

Cette disposition nécessite, d'une part, la fabrication d'un déflecteur en deux matériaux, avec des difficultés de liaison entre ces deux matériaux et, d'autre part, en fonctionnement et de par la courbure du pare-brise, le déflecteur risque de prendre une position telle que son bord libre plus mou ne soit plus en vis-à-vis de la surface à essuyer mais c'est la partie la plus dure qui risque de se trouver en contact avec ladite surface à essuyer.

La présente invention vise à remédier aux inconvénients mentionnés ci-dessus en proposant un déflecteur d'air ne risquant pas d'endommager la surface à essuyer et cela quelle que soit sa position lors du mouvement d'essuyage.

Selon l'invention, un déflecteur d'air pour balai d'essuie-glace, notamment de véhicule automobile, ledit déflecteur présentant une partie profilée et des moyens d'accrochage sur le balai d'essuie-glace ou sur un bras d'essuie-glace portant ledit balai (déflecteur du type divulgué, par exemple, par DE-A-3 637 348) est caractérisé en ce que au moins un bourrelet élastiquement déformable ceinture tout ou partie du déflecteur de manière à pouvoir entrer en contact avec la surface à essuyer sans risque de l'endommager.

Grâce à cette disposition, le bourrelet, de par sa constitution élastique et son étendue, peut venir en contact avec la surface à essuyer sans endommager celle-ci.

Selon un mode de réalisation de l'invention, le bourrelet s'étend dans une direction orthogonale à la direction longitudinale du déflecteur.

Selon un autre mode de réalisation de l'invention, le bourrelet est un bourrelet annulaire.

Ainsi, le bourrelet peut, d'une part, être positionné selon la demande sur le déflecteur tout en ayant un maximum d'efficacité et, d'autre part, assurer la protection de la surface à essuyer en cas de contact avec le déflecteur et cela quelle que soit la position de celui-ci par rapport à ladite surface.

Dans le cas où un déflecteur d'air comporte des moyens de liaison entre la partie profilée et les moyens d'accrochage, un autre mode de réalisation consiste en ce que le bourrelet annulaire ceinture les moyens de liaison et la partie profilée.

De ce fait, la mise en place du bourrelet annulaire sur le déflecteur est d'une relative simplicité dans le sens où celui-ci ne fait qu'entourer le déflecteur en étant porté par celui-ci.

Les autres caractéristiques et avantages de l'invention ressortiront de la description qui va suivre en se référant aux dessins annexés sur lesquels :

– la figure 1 est une vue de face du déflecteur selon l'invention ;
– la figure 2 est une vue de droite de la figure 1 ;
– la figure 3 est une vue en coupe partielle selon la ligne AA de la figure 2 ;
– la figure 4 est une première variante de réalisation du détail D de la figure 2 ;
– la figure 5 est une vue en coupe selon ligne BB de la figure 4 ;
– la figure 6 est une deuxième variante de réalisation du détail D de la figure 2 ;
– la figure 7 est une vue en coupe selon la ligne CC de la figure 6.

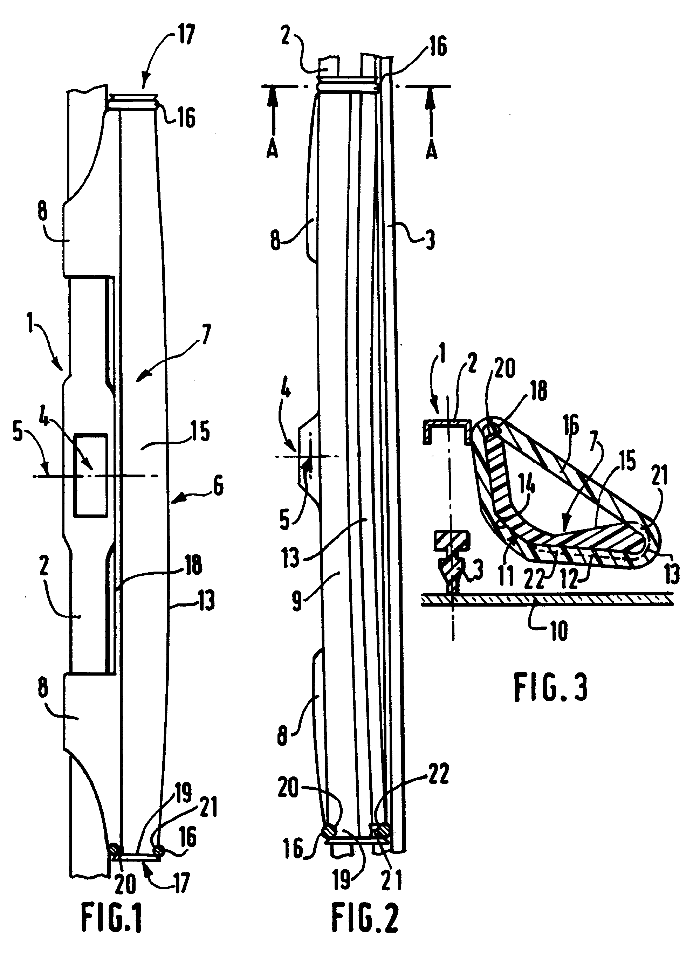

En se référant aux figures 1 et 2, on peut voir un balai d'essuie-glace 1 qui comprend généralement une armature 2 apte à supporter une lame d'essuie-glace 3.

Cette armature 2, constituée de préférence par un profilé à section transversale en U renversé, comporte, dans sa partie médiane, une ouverture 4 pratiquée dans le fond du profilé et dans laquelle est destiné à être disposé un axe d'articulation 5.

Cet axe 5 est destiné à être engagé dans un logement d'une extrémité d'un bras d'essuie-glace (non représenté) pour assurer une liaison articulée entre le bras et l'armature 2.

Le balai 1 est équipé d'un déflecteur d'air 6 porté ici par le balai, mais il peut être envisagé et cela sans sortir du cadre de l'invention que ledit déflecteur soit porté par le bras d'essuie-glace.

De même la suite de la description se rapporte à un type particulier de déflecteur d'air mais l'invention peut s'appliquer à tout autre type de déflecteurs.

Le type de déflecteur servant de base à la description de l'invention est décrit plus en détail dans le document FR-A-2 621 288 et ne sera décrit ici que dans ses grandes lignes.

En se référant en plus à la figure 3, le déflecteur 6 présente une partie profilée 7, des moyens d'accrochage 8, ici sur l'armature 2 du balai 1, et des moyens de liaison 9 entre la partie profilée 7 et les moyens d'accrochage 8, ces moyens de liaison 9 s'étendant en direction de la surface à essuyer 10, notamment sur la face d'un pare-brise de véhicule automobile.

La partie profilée 7 a une forme sensiblement convexe tournée vers la surface 10 à essuyer. Cette partie profilée comporte, sur sa surface interne 11, une première zone 12 sensiblement plane inclinée d'un certain angle par rapport à la surface 10 et en s'étendant depuis un bord avant 13 vers l'arrière, c'est-à-dire vers le balai 1, ledit bord 13 ayant une forme arrondie sensiblement semi-cylindrique.

Une seconde zone 14 fait suite à la première 12 en ayant un angle par rapport à la surface à essuyer plus grand que l'angle de la première zone de telle sorte que le profil de la surface interne de la partie profilée 7 soit celui d'un dièdre convexe tourné vers la surface 10.

La surface externe 15 de la partie profilée 7 a une forme de dièdre concave, l'épaisseur de ladite partie profilée diminuant progressivement du bord avant 13 vers le balai 1.

Cette partie profilée est disposée à distance de la surface à essuyer 10 comme mieux décrit dans la demande de brevet mentionnée ci-dessus (FR-A-2 621 288).

Les moyens de liaison 9 sont ici constitués par un voile plein reliant l'extrémité interne du bord profilé 7 délimité par la zone 14 aux moyens d'accrochage 8.

Ici, le voile 9 s'étend tout au long de la partie profilée 7 en portant les moyens d'accrochage 8 comme mieux visible à la figure 1.

De préférence, la partie profilée 7, le voile constituant les moyens de liaison 9 et les moyens d'accrochage 8 sont réalisés en matière plastique et en une seule pièce.

De façon à limiter une éventuelle détérioration de la surface à essuyer 10 par contact de la partie profilée 7 avec ladite surface, le déflecteur d'air porte au moins un bourrelet annulaire élastiquement déformable 16, faisant saillie au-delà du déflecteur, ici deux bourrelets, disposés chacun au voisinage de l'extrémité libre 17 du déflecteur 6 en s'étendant dans une direction orthogonale à la direction longitudinale du déflecteur 6, le bourrelet ayant, à titre d'exemple, une forme circulaire en section.

Sans sortir du cadre de l'invention, il peut être prévu, soit que le bourrelet 16 s'étende dans la direction longitudinale du déflecteur en étant porté par la zone 12 de la partie profilée 7 et en étant situé au voisinage du bord externe 13, ce bourrelet pouvant avoir une forme linéaire ou une forme annulaire en s'appuyant en outre sur la surface externe 15 opposée à la zone 12, soit que le bourrelet 16 s'étende dans la direction précédemment décrite en ayant également une forme linéaire en reposant sur la surface interne 11 de la partie profilée 7.

Comme mieux visible sur la figure 3, le bourrelet 16 ceinture en partie ou en totalité le déflecteur 6.

Ici, le bourrelet 16 ceinture en totalité le déflecteur 6 en s'appuyant successivement sur le bord arrondi 13, la surface interne 11 de la partie profilée 7, la surface interne du voile 9 formant moyen de liaison et sur le bord libre 18 dudit voile.

Bien entendu, et cela sans sortir du cadre de l'invention, le bourrelet 16 peut n'entourer que la partie profilée 7 qui, comme mentionné dans la demande de brevet sus-indiquée (FR-A-2 621 288), peut comporter, à la place du voile 9, des jambes de liaison distantes l'une de l'autre en créant ainsi un espace libre entre lesdites jambes, espace délimitant un bord interne de la partie profilée, bord interne dirigé vers le balai d'essuie-glace.

Dans ce cas le bourrelet 16 peut prendre appui successivement sur le bord externe 13, la surface interne 11 de la partie profilée 7, le bord interne ainsi formé, et la surface externe 15 de ladite partie profilée.

De préférence, le bourrelet 16 est maintenu en place dans un logement 19 prévu au voisinage de l'extrémité 17 du déflecteur 6.

Le logement 19 consiste en au moins une rainure de forme semi-cylindrique portée par certaines ou toute des surfaces aptes à supporter le bourrelet 16 de façon à ce qu'une moitié de la section du bourrelet 16 soit maintenue alors que l'autre moitié est libre en faisant saillie à partir de la surface considérée.

Sur la figure 3, le logement 19 consiste en une première rainure 20 prévue sur le bord libre 18 du voile 9 formant moyen de liaison, en une seconde rainure 21 prévue sur le bord externe arrondi 13, et en une troisième rainure 22 prévue sur la surface interne de la partie profilée 7, ici uniquement la zone 12 précédemment définie, les rainures se situant dans un même plan.

En pratique, il est prévu au voisinage de l'extrémité libre 17 et à proximité des bords externes des rainures 20 et 21, un voile 23. Ce voile a une forme sensiblement d'un trapèze dont la petite base s'appuie sur la surface externe 15 et plus particulièrement sur la surface externe de la zone 14, la grande base joint les bords libres 13 et 18 du déflecteur et les côtés sont portés respectivement par la surface externe 15 de la première zone 12 et la surface externe du voile 9 formant moyen de liaison en étant disposée orthogonalement à la direction longitudinale du déflecteur 6.

Ainsi le bourrelet 16 est non seulement immobilisé par la succession de rainures mais aussi est protégé contre d'éventuels accidents de manipulation par le voile 23 qui empêche toute pénétration de corps étrangers par les extrémités libres 17.

Il est prévu que le bourrelet annulaire élastiquement déformable 16 soit un élément distinct du déflecteur 6 ou un élément surmoulé sur ledit déflecteur, dans ces deux cas le bourrelet est toujours d'une matière moins dure que celle de la matière constitutive du déflecteur 6.

Pour la suite de la description, il est considéré que le bourrelet annulaire 16 est un élément apte à être rapporté sur le déflecteur 6.

Ainsi, avant son montage, le bourrelet annulaire 16 a une forme de tore sensiblement cylindrique qui, lors de l'engagement dudit bourrelet par l'extrémité 17, se déforme élastiquement pour venir s'appuyer dans les fonds des rainures précédemment définies et les faces correspondantes du déflecteur en ayant en final la configuration de la figure 3.

Dans cette configuration, on peut voir que la direction du bourrelet 16, pris au niveau de la surface 10, est sensiblement parallèle à ladite surface et dans le cas d'un risque de contact de n'importe quelle partie de la partie profilée 7, le bord libre ou les zones 12 et 14, le bourrelet 16 assure ledit contact en protégeant ainsi la surface 10 contre toute détérioration.

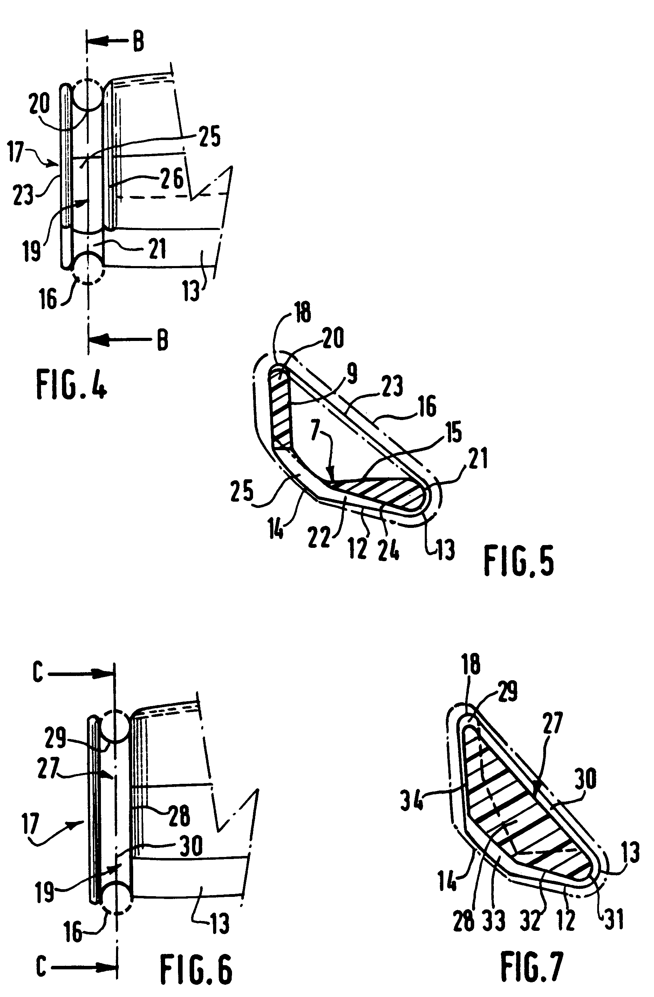

On se réfère maintenant aux figures 4 et 5 montrant une première variante de réalisation du logement du bourrelet 16, ledit bourrelet ayant été symbolisé sur les dessins pour des raisons de clarté.

Sur ces figures, les mêmes signes de références ont été conservés pour aider à la compréhension de la suite de la description.

Ainsi, le logement 19 comporte une première rainure 20, une seconde rainure 21, identiques à celles de la figure 3, et une troisième rainure 22 dont le fond 24 n'est pas parallèle à la surface de la zone 12 mais converge vers la surface externe 15 de la partie profilée 7 de façon à pouvoir créer un évidement 25 dans la seconde zone 14 de ladite partie profilée.

Ainsi le bourrelet 16, plus particulièrement situé au niveau de cet évidement 25, peut pénétrer dans celui-ci de façon à ne pas perturber l'écoulement des flux d'air en arrière de la partie profilée 7.

En outre, il est prévu un second voile 26 de forme et de disposition identiques au voile 23 précédemment décrit, celui-ci étant situé à distance et parallèlement au voile 23 en étant disposé au voisinage de l'autre bord des rainures.

Ainsi le bourrelet annulaire 16 est maintenu dans son logement 19 d'une part par les rainures précédemment définies et d'autre part par les deux voiles 23 et 26 assurant, outre un bon positionnement, une protection dudit bourrelet.

Les figures 6 et 7 représentent une seconde variante de réalisation du logement 19 pour le bourrelet annulaire 16.

Ce logement 19 est constitué par une seule et unique rainure continue 27 portée par une paroi 28 disposée au voisinage de l'extrémité 17 du déflecteur.

Cette paroi 28, de forme sensiblement trapézoïdale, de dimension sensiblement identique à la dimension transversale du déflecteur, porte une première partie de rainure 29, sensiblement identique à la rainure 20 précédemment définie, une deuxième partie de rainure 30, correspondant à la grande base du trapèze précédemment défini, une troisième partie de rainure 31, sensiblement identique à la rainure 21 mentionnée ci-dessus, une quatrième partie de rainure 32, également sensiblement identique à la rainure 22, une cinquième partie de rainure 33, correspondant à la petite base du trapèze et une sixième partie de rainure 34 reliant la rainure 33 à la rainure 29.

De ce fait le bourrelet annulaire 16 est immobilisé dans une rainure continue et l'utilisation de voile n'est plus nécessaire.

La présente invention n'est pas limitée aux exemples de réalisation décrits mais englobe toutes variantes; notamment il peut être prévu que le bourrelet annulaire soit un bourrelet à boucle ouverte fixé à chaque bord libre du déflecteur.

Dans le cas où le bourrelet 16 est porté uniquement par la partie profilée 7, ledit bourrelet est porté par la surface interne 11 de ladite partie profilée 7 en englobant les bords libres externe et interne de ladite partie profilée.

De même si le bourrelet est porté par les moyens de liaison 9 et la partie profilée 7 le bourrelet s'appuie sur la surface interne 11 et la surface interne des moyens de liaison 9 en englobant le bord libre externe 13 et le bord libre interne 18.

**Revendications**

1. Déflecteur d'air pour balai d'essuie-glace notamment de véhicule automobile, déflecteur présentant une partie profilée (7) et des moyens d'accrochage (8) sur le balai (1) d'essuie-glace ou sur un bras d'essuie-glace portant ledit balai, caractérisé en ce que au moins un bourrelet élastiquement déformable (16) ceinture tout ou partie du déflecteur (6) de manière à pouvoir entrer en contact avec la surface à essuyer sans risque de l'endommager.

2. Déflecteur d'air selon la revendication 1, caractérisé en ce que le bourrelet (16) s'étend dans une direction orthogonale à la direction longitudinale du déflecteur (6).

3. Déflecteur d'air selon l'une des revendications 1 ou 2, caractérisé en ce que le bourrelet (16) est un bourrelet annulaire.

4. Déflecteur d'air selon l'une des revendications 1 à 3 dans lequel il est prévu des moyens de liaison

(9) entre la partie profilée (7) et les moyens d'accrochage (8), caractérisé en ce que le bourrelet annulaire (16) ceinture la partie profilée (7) du déflecteur (6) et les moyens de liaison (9).

5. Déflecteur d'air selon l'une des revendications précédentes, caractérisé en ce que le bourrelet (16) est situé dans un logement (19) porté par le déflecteur (6).

6. Déflecteur d'air selon la revendication 5, caractérisé en ce que le logement (19) consiste en une succession d'au moins deux rainures (20,21,22).

7. Déflecteur d'air selon la revendication 5, caractérisé en ce que le logement (19) consiste en une rainure (27) continue.

8. Déflecteur d'air selon la revendication 6 ou 7, caractérisé en ce que la rainure (20,21,22,27) est de forme sensiblement semi-cylindrique.

9. Déflecteur d'air selon la revendication 7, caractérisé en ce que la rainure semi-cylindrique (27) est portée par une paroi (28).

## Patentansprüche

1. Windableiter für Scheibenwischerleisten, insbesondere für Kraftfahrzeuge, wobei der genannte Ableiter einen Profilteil (7) sowie Mittel zum Einhaken (8) an der Scheibenwischerleiste (1) oder an einem Wischarm, der die genannte Leiste trägt, aufweist, dadurch gekennzeichnet, daß der Ableiter (6) von wenigstens einem elastisch verformbaren Wulst (16) ganz oder teilweise umgeben ist, damit der Kontakt mit der zu reinigenden Glasfläche ohne die Gefahr einer Beschädigung hergestellt werden kann.

2. Windableiter nach Anspruch 1, dadurch gekennzeichnet, daß sich der Wulst (16) in einer Richtung erstreckt, die orthogonal zur Längsrichtung des Ableiters (6) verläuft.

3. Windableiter nach einem der Ansprüche 1 oder 2, dadurch gekennzeichnet, daß es sich bei dem Wulst (16) um einen ringförmigen Wulst handelt.

4. Windableiter nach einem der Ansprüche 1 bis 3, worin Mittel zur Verbindung (9) zwischen dem Profilteil (7) und den Einhakmitteln (8) vorgesehen sind, dadurch gekennzeichnet, daß der ringförmige Wulst (16) den Profilteil (7) des Ableiters (6) und die Verbindungsmittel (9) umgibt.

5. Windableiter nach einem der vorherigen Ansprüche, dadurch gekennzeichnet, daß der Wulst (16) in einer Aufnahme (19) angeordnet ist, die auf dem Ableiter (6) ruht.

6. Windableiter nach Anspruch 5, dadurch gekennzeichnet, daß die Aufnahme (19) aus einer Folge von wenigstens zwei Nuten (20, 21, 22) besteht.

7. Windableiter nach Anspruch 5, dadurch gekennzeichnet, daß die Aufnahme (19) aus einer durchgehenden Nut (27) besteht.

8. Windableiter nach Anspruch 6 oder 7, dadurch gekennzeichnet, daß die Nut (20, 21, 22, 27) im wesentlichen halbzylinderförmig ausgebildet ist.

9. Windableiter nach Anspruch 7, dadurch gekennzeichnet, daß die halbzylinderförmige Nut (27) auf einer Wand (28) ruht.

## Claims

1. An air deflector for a windscreen wiper blade, in particular for a motor vehicle, the said deflector having a profiled portion (7) and attachment means (8) for attaching the deflector on the wiper blade (1) or on a windscreen wiper arm carrying the said blade, characterised in that at least one resiliently deformable cushion element (16) embraces all or part of the deflector (6) in such a way as to be able to make contact with the surface to be swept without any risk of damage to the latter.

2. An air deflector according to Claim 1, characterised in that the cushion element (16) extends in a direction which is orthogonal to the longitudinal direction of the deflector (6).

3. An air deflector according to Claim 1 or Claim 2, characterised in that the cushion element (16) is an annular cushion element.

4. An air deflector according to one of Claims 1 to 3, wherein connecting means (9) are provided between the profiled portion (7) and the attachment means (8), characterised in that the annular cushion element (16) embraces the profiled portion (7) of the deflector (6) and the connecting means (9).

5. An air deflector according to one of the preceding Claims, characterised in that the cushion element (16) is situated in a support element (19) carried by the deflector (6).

6. An air deflector according to Claim 5, characterised in that the support element (19) comprises a succession of at least two grooves (20, 21, 22).

7. An air deflector according to Claim 5, characterised in that the support element (19) comprises a continuous groove (27).

8. An air deflector according to Claim 6 or Claim 7, characterised in that the groove (20, 21, 22, 27) is substantially semi-cylindrical in shape.

9. An air deflector according to Claim 7, characterised in that the semi-cylindrical groove (27) is carried by a wall (28).

FIG.1

FIG.2

FIG.3

**FIG.4**

**FIG.5**

**FIG.6**

**FIG.7**